# EUROPÄISCHE PATENTSCHRIFT

(11) **EP 4 542 428 B1**
(45) Veröffentlichungstag und Bekanntmachung des Hinweises auf die Patenterteilung: **31.12.2025**
(21) Anmeldenummer: 23205064.1
(22) Anmeldetag: 20.10.2023
(51) Int. Cl.: G06F 21/64, H04L 9/32

(54) **VERFAHREN ZUR AUFZEICHNUNG UND VERIFIKATION VON MESSWERTEN SOWIE DAZUGEHÖRIGE EINRICHTUNGEN UND MESSANORDNUNG**
METHOD FOR RECORDING AND VERIFYING MEASURED VALUES, AND CORRESPONDING DEVICES AND MEASURING ARRANGEMENT
PROCÉDÉ D'ENREGISTREMENT ET DE VÉRIFICATION DE VALEURS DE MESURE AINSI QUE DISPOSITIFS ET AGENCEMENT DE MESURE ASSOCIÉS

(43) Veröffentlichungstag der Anmeldung: 23.04.2025
(73) Patentinhaber: Testo SE & Co. KGaA, 79822 Titisee-Neustadt (DE)
(72) Erfinder: Flender, Lucas, 79777 Ühlingen-Birkendorf (DE); Jordt, Andreas, 24146 Kiel (DE)
(74) Vertreter: Mertzlufft-Paufler, Cornelius

(56) Entgegenhaltungen:
- EP-A1- 4 002 179
- DE-A1- 102013 205 091
- US-A1- 2021 081 570

## Beschreibung

Die Erfindung betrifft ein Verfahren zur Aufzeichnung eines Feldes von Messwerten, wobei das Feld von Messwerten zu jedem Messwert wenigstens ein Messdatum und eine zugehörige Positionsangabe in dem Feld aufweist, wobei die Messwerte zu Blöcken gruppiert werden und zu jedem Block ein Signaturwert berechnet wird. Ein solches Verfahren findet in der Praxis vielfach Verwendung.

Die Erfindung betrifft weiter ein Verfahren zur Verifikation eines Feldes von Messwerten, wobei das Feld von Messwerten in Blöcke gruppiert wird und zu jedem Block ein Signaturwert bereitgestellt wird, wobei die Signaturwerte verifiziert werden. Derartige Verfahren sind in der Praxis bekannt.

Die Erfindung betrifft weiter eine Aufzeichnungseinrichtung für Messwerte, wobei ein Feld von Messwerten eingebbar ist, wobei das Feld von Messwerten zu jedem Messwert wenigstens ein Messdatum und eine zugehörige Positionsangabe in dem Feld aufweist, wobei die Messwerte mit einem Gruppierer zu Blöcken gruppierbar sind und zu jedem Block mit einem Signierer ein Signaturwert berechenbar ist. Eine solche Einrichtung ist in der Praxis bekannt.

Die Erfindung betrifft weiter eine Verifikationseinrichtung für Messwerte, wobei ein Feld von Messwerten eingebbar ist, das in Blöcke gruppiert ist, wobei zu jedem Block ein Signaturwert eingebbar ist, wobei ein Verifikator zu einer Verifizierung der Signaturwerte eingerichtet ist. Solche Einrichtungen sind in der Praxis bekannt.

Die Erfindung betrifft weiter eine Messanordnung, mit wenigstens einem Sensor, der zu einer Erzeugung eines Feldes von Messwerten, wobei das Feld von Messwerten zu jedem Messwert wenigstens ein Messdatum und eine zugehörige Positionsangabe in dem Feld aufweist, eingerichtet ist. Eine derartige Messanordnung ist in der Praxis bekannt.

In der US 2021/081570 A1 werden Systeme und Verfahren zur Verifizierung physikalischer Messungen für Bioreaktoren offenbart. Physikalische Messungen können mit einem oder mehreren Sensoren durchgeführt werden, die mit einem Bioreaktor verbunden sind. Die Sensoren können Eigenschaften des Bioreaktors oder Eigenschaften von Materialien innerhalb des Bioreaktors messen. Die Verifizierung der physikalischen Messungen kann implementiert werden, um den Nachweis der vom Bioreaktor geleisteten physikalischen Arbeit zu ermöglichen.

Die EP 4 002 179 A1 beschreibt ein Verfahren zum Schützen der Integrität von Messdaten, die von einem Sensorgerät erfasst werden, umfassend: als Reaktion auf das Erfassen von Messdaten Bestimmen durch das Sensorgerät, ob bereits ein Gesamtwert generiert wurde, und: wenn noch kein Gesamtwert erhalten wurde, Zuordnen der Messdaten zu einem Gesamtwert mittels einer vorgegebenen Aggregatfunktion, die Messdaten als obligatorisches Argument und einen zuvor generierten Gesamtwert als optionales Argument verwendet; wobei wenn bereits ein Gesamtwert erhalten wurde, Zuordnen der Kombination dieses Gesamtwerts und der Messdaten zu einem neuen Gesamtwert mittels der genannten Aggregatfunktion; und als Reaktion auf das Erfüllen einer vorgegebenen Bedingung Berechnen einer Signatur des Gesamtwerts unter Verwendung eines geheimen Schlüssels des Sensorgeräts; und Ausgeben der Signatur über eine Kommunikationsschnittstelle des Sensorgeräts, und/oder Speichern der Signatur in einem Speicher. Weiter wird ein entsprechendes Verfahren zur Authentifizierung von Messdaten beschrieben.

DE 10 2013 205091 A1 betrifft ein Verfahren zum Erkennen unbefugter Fremdeinwirkungen, welches umfasst: das konstante Erfassen von Messrohdaten in einer Sensoreinheit; das Erhalten erster Messergebnisse durch Verarbeiten der Messrohdaten eines definierten Zeitintervalls in einer Messeinheit; das Speichern der ersten Messergebnisse oder das Übertragen der ersten Messergebnisse an eine Aufsichtsinstanz zu definierten Zeitpunkten über einen Kommunikationskanal; das Speichern eines definierten Bruchteils von Messrohdaten oder das Übertragen eines definierten Bruchteils von Messrohdaten an die Aufsichtsinstanz nach dem Zufallsprinzip über den Kommunikationskanal; das Erhalten zweiter Messergebnisse durch Verarbeiten der Messrohdaten des definierten Zeitraumes durch die Aufsichtsinstanz; und das Vergleichen der ersten und zweiten Messergebnisse eines Zeitintervalls.

Der Erfindung liegt die Aufgabe zugrunde, Messdaten vor Manipulation zu schützen sowie den dazu erforderlichen Speicherbedarf zu reduzieren.

Zur Lösung dieser Aufgabe schlägt die Erfindung die Merkmale von Anspruch 1 vor. Insbesondere wird somit erfindungsgemäß bei einem Verfahren zur Aufzeichnung eines Feldes von Messwerten der eingangs beschriebenen Art vorgeschlagen, dass wenigstens ein Block wenigstens einen Messwert enthält, der auch in wenigstens einem anderen Block enthalten ist.

Hierdurch können die genannten Blöcke miteinander verkettet werden, sodass ein unbemerktes Löschen einzelner Blöcke von Messwerten mitsamt deren Signaturen vermieden werden kann. Das Fehlen einzelner Blöcke würde nämlich dank derjenigen Messwerte auffallen, die auch in anderen Blöcken enthalten sind. Eine Manipulation erfasster Messdaten wird somit erschwert.

Es ist möglich, einen Überlapp oder eine Verschränkung zweier Blöcke durch jeweils einen einzigen gemeinsamen Messwert zu erreichen, oder es werden jeweils mehr als ein Messwert gemeinsam genutzt.

Bei einer vorteilhaften Ausführung kann vorgesehen sein, dass der wenigstens eine Messwert an einer festen Position in dem wenigstens einen Block angeordnet wird.

Dank dieser Anordnung kann leicht erkannt werden, nach welchem Messwert des wenigstens einen Blockes in dem wenigstens einem anderen Block zu suchen ist.

Alternativ oder zusätzlich kann vorgesehen sein, dass der wenigstens eine Messwert an einer festen Position in dem wenigstens einen anderen Block angeordnet wird.

Damit kann leicht nach dem entsprechenden Messwert in dem wenigstens einen anderen Block gesucht werden und leicht erkannt werden, ob Blöcke von Messwerten gelöscht wurden.

Bei einer weiteren vorteilhaften Ausführung kann vorgesehen sein, dass der wenigstens eine Messwert an einer Randposition in dem wenigstens einen Block angeordnet wird. Dies kann benutzt werden, um eine Unterteilung einer Folge oder eines Feldes von Messwerten in miteinander verschränkte Blöcke zu erleichtern.

Dabei kann es sich beispielsweise um eine Endposition handeln. Dies ist von Vorteil, da auf diese Weise der wenigstens eine Messwert, nach dem in dem wenigstens einem anderen Block zu suchen ist, einfach zu identifizieren ist. Dies erleichtert den Verifikationsprozess der Messdaten.

Alternativ oder zusätzlich kann vorgesehen sein, dass der wenigstens eine Messwert an einer Randposition in dem wenigstens einen anderen Block angeordnet wird. Dies kann eine Verkettung oder Verschränkung benachbarter Blöcke erleichtern.

Dabei kann es sich beispielsweise um eine Anfangsposition handeln. Dadurch kann leicht erkannt werden, ob der wenigstens eine Messwert in dem wenigstens einen anderen Block enthalten ist, da lediglich die jeweilige Randposition zu überprüfen ist. So kann sichergestellt werden, dass die Messwerte vollständig in einer lückenlosen Reihenfolge vorhanden sind und insbesondere nicht einzelne Blöcke von Messwerten gelöscht worden sind.

Bei einer weiteren vorteilhaften Ausgestaltung kann vorgesehen sein, dass die Position des wenigstens einen Messwerts in dem wenigstens einen Block aus der zugehörigen Positionsangabe bestimmt wird.

Vorteilhaft an dieser Ausgestaltung ist, dass die Anordnung der Messwerte in dem jeweiligen Block der Anordnung in dem Feld von Messwerten entspricht, sodass diese leicht zugeordnet werden können.

Alternativ oder zusätzlich kann vorgesehen sein, dass die Position des wenigstens einen Messwerts in dem wenigstens einem anderen Block aus der zugehörigen Positionsangabe bestimmt wird.

So kann leichter verglichen werden, ob der wenigstens eine Messwert in den entsprechenden Blöcken vorhanden ist.

Bei einer weiteren vorteilhaften Ausgestaltung kann vorgesehen sein, dass jeder Block aus einer in Bezug auf das Feld zusammenhängenden Gruppe von Messwerten gebildet wird.

Auf diese Weise kann gewährleistet werden, dass die Blöcke nicht aus wahllos ausgewählten Messwerten zusammengesetzt werden, sondern dass diese Abschnitte des Feldes von Messwerten entsprechen. Dies kann zu einer besseren Übersichtlichkeit führen, was wiederum dazu führen kann, dass eine eventuelle Manipulation der Messdaten schneller erkannt wird.

Bei einer weiteren vorteilhaften Ausgestaltung kann vorgesehen sein, dass das Feld eindimensional ist.

Damit ist die Reihenfolge der Messdaten eindeutig und einzelne Blöcke von Messdaten können besser miteinander verglichen werden. Dies Variante ist für eindimensionale Zahlenfolgen, beispielsweise Zeit-Messreihen, einfach nutzbar. Das Verfahren ist somit einfach bei Datenloggern verwendbar.

Bei einer weiteren vorteilhaften Ausgestaltung kann vorgesehen sein, dass die Positionsangabe durch einen Messzeitpunkt bestimmt wird.

Durch diese Ausgestaltung kann überprüft werden, ob eine lückenlose Reihenfolge der Messwerte vorliegt. Es sind so auch einfach Messreihen eines Datenloggers verwendbar.

Bei einer weiteren vorteilhaften Ausgestaltung kann vorgesehen sein, dass für den Signaturwert ein Hashwert des Blockes berechnet wird.

Auf diese Weise kann die Speichergröße der Signatur reduziert werden, da die Größe eines Hashwerts begrenzbar ist.

Bei einer weiteren vorteilhaften Ausgestaltung kann vorgesehen sein, dass die Messdaten aus wenigstens einem Sensor ausgelesen werden. Somit ist die Erfindung für Messdaten eines Datenloggers verwendbar.

So können die Messdaten unmittelbar im Anschluss an die Messung vor Manipulation geschützt werden.

Bevorzugt wird dabei ein Messzeitpunkt ermittelt und zu einer Positionsangabe im Feld verarbeitet. Somit ist die Erfindung auch in typischen Einsatzbereichen von Datenloggern verwendbar.

Der Messzeitpunkt als Positionsangabe erleichtert den späteren Verifikationsprozess der signierten Messdaten.

Bei einer weiteren vorteilhaften Ausgestaltung kann vorgesehen sein, dass zu einer vorhandenen Gruppierung in Blöcken eine neue Gruppierung in Blöcke gebildet wird, wobei wenigstens ein Block der neuen Gruppierung aus wenigstens zwei Blöcken der alten Gruppierung gebildet wird.

Vorteilhaft dabei ist, dass der Speicherbedarf für Signaturen verkleinert werden kann, da durch das Zusammenfassen von Blöcken auch die Anzahl der zu speichernden Signaturen reduziert wird.

Bevorzugt wird wenigstens ein Block der neuen Gruppierung aus wenigstens zwei Blöcken, die wenigstens einen Messwert gemeinsam haben, gebildet.

Dies ist insbesondere dann vorteilhaft, wenn der wenigstens eine Messwert in den Blöcken auf Randpositionen, beispielsweise der Anfangs- und der Endposition, angeordnet ist. Bei dieser Anordnung sind die jeweiligen Blöcke von Messwerten benachbart. Damit kann beim Zusammenfassen dieser Blöcke ein neuer Block geschaffen werden, dessen Messwerte eine lückenlose Messreihe bilden.

Besonders bevorzugt geht der wenigstens eine gemeinsame Messwert nur einfach in den Block der neuen Gruppierung ein.

Durch dieses Vermeiden von redundanten Messwerten in einem Block kann der benötigte Speicherplatz reduziert werden.

Alternativ oder zusätzlich sind zur Lösung der genannten Aufgabe erfindungsgemäß die Merkmale des nebengeordneten, auf ein Verfahren zur Verifikation eines Feldes von Messwerten gerichteten Anspruchs vorgesehen. Insbesondere wird somit zur Lösung der genannten Aufgabe bei einem Verfahren zur Verifikation eines Feldes von Messwerten der eingangs beschriebenen Art erfindungsgemäß vorgeschlagen, dass zu wenigstens einem Block der Blöcke überprüft wird, ob wenigstens ein Messwert auch in wenigstens einem anderen Block enthalten ist. Ein erfindungsgemäßes Verfahren zur Verifikation eines Feldes von Messwerten kann vorteilhaft im Nachgang zur Durchführung eines wie zuvor beschriebenen oder nachfolgend beanspruchten Verfahrens zur Aufzeichnung eines Feldes von Messwerten benutzt werden.

Durch dieses Verfahren kann überprüft werden, ob der wenigstens eine andere Block gelöscht wurde, da in dem Fall der wenigstens eine Messwert nicht in einem anderen Block zu finden wäre.

Alternativ oder zusätzlich sind zur Lösung der genannten Aufgabe erfindungsgemäß die Merkmale des nebengeordneten, auf eine Aufzeichnungseinrichtung für Messwerte gerichteten Anspruchs vorgesehen. Insbesondere wird somit zur Lösung der genannten Aufgabe bei einer Aufzeichnungseinrichtung für Messwerte der eingangs beschriebenen Art erfindungsgemäß vorgeschlagen, dass der Gruppierer derart eingerichtet ist, dass wenigstens ein Block wenigstens einen Messwert enthält, der auch in wenigstens einem anderen Block enthalten ist.

Vorteilhaft ist hierbei, dass die Messdaten vor Manipulation geschützt werden können und insbesondere das unbemerkte Löschen einzelner Blöcke vermieden werden kann, da die Blöcke durch überlappende Messwerte miteinander verbunden sind.

Bei einer vorteilhaften Ausgestaltung kann vorgesehen sein, dass Mittel zur Ausführung eines wie zuvor beschriebenen Verfahrens ausgebildet sind.

Dadurch können die oben beschriebenen Vorteile auf eine Aufzeichnungseinrichtung übertragen werden.

Alternativ oder zusätzlich sind zur Lösung der genannten Aufgabe erfindungsgemäß die Merkmale des nebengeordneten, auf eine Verifikationseinrichtung für Messwerte gerichteten Anspruchs vorgesehen. Insbesondere wird somit zur Lösung der genannten Aufgabe bei einer Verifikationseinrichtung für Messwerte der eingangs beschriebenen Art erfindungsgemäß vorgeschlagen, dass ein Überprüfer zu einer Überprüfung, ob wenigstens ein Block wenigstens einen Messwert enthält, der auch in wenigstens einem anderen Block enthalten ist, eingerichtet ist.

Dies ist von Vorteil, um zu überprüfen, ob einzelne signierte Blöcke entfernt wurden, da in dem Fall der wenigstens eine Messwert nicht in dem wenigstens einen anderen Block auffindbar wäre.

Bei einer vorteilhaften Ausgestaltung kann vorgesehen sein, dass Mittel zur Ausführung eines wie zuvor beschriebenen Verfahrens ausgebildet und/oder eingerichtet sind.

Dadurch können die oben beschriebenen Vorteile auf eine Aufzeichnungseinrichtung übertragen werden.

Alternativ oder zusätzlich sind zur Lösung der genannten Aufgabe erfindungsgemäß die Merkmale des nebengeordneten, auf eine Messanordnung gerichteten Anspruchs vorgesehen. Insbesondere wird somit zur Lösung der genannten Aufgabe bei einer Messanordnung der eingangs beschriebenen Art erfindungsgemäß vorgeschlagen, dass eine wie zuvor beschriebene Aufzeichnungseinrichtung ausgebildet ist.

Dadurch können die oben beschriebenen Vorteile auf eine Messanordnung übertragen werden.

Bevorzugt ist die Aufzeichnungseinrichtung derart an den wenigstens einen Sensor angeschlossen, dass das erzeugte Feld von Messwerten in die Aufzeichnungseinrichtung eingegeben wird.

Auf diese Weise können die Messwerte unmittelbar nach dem Messvorgang vor einer möglichen Manipulation, insbesondere vor einem Löschen von Blöcken von Messwerten, geschützt werden.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: eine Messanordnung 21 mit einem Sensor 13 und einer Aufzeichnungseinrichtung 15, die Mittel zur Durchführung eines erfindungsgemäßen Verfahrens aufweist,
- Fig. 2: zwei unterschiedliche Gruppierungen 14a, 14b von Blöcken 5d, 5e von Messwerten 2, 2',
- Fig. 3: eine Verifikationseinrichtung 18 zur Durchführung eines erfindungsgemäßen Verfahrens.

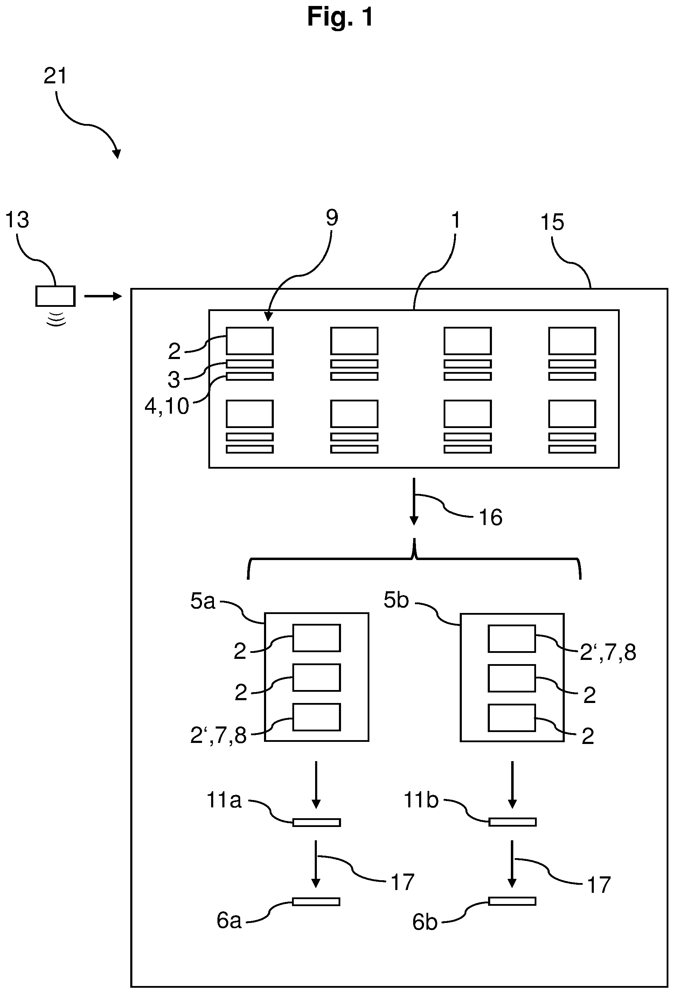

In Fig. 1 ist eine Messanordnung 21 zu sehen. Ein Sensor 13 erzeugt ein Feld 1 von Messwerten 2, das in eine Aufzeichnungseinrichtung 15 eingegeben wird. Die Messwerte 2 sind in einer Gruppe 9 angeordnet und weisen jeweils ein Messdatum 3 und eine Positionsangabe 4 auf. Bei der Positionsangabe 4 handelt es sich in diesem Ausführungsbeispiel um einen Messzeitpunkt 10.

Die Messwerte 2 werden mittels eines Gruppierers 16 zu zwei Blöcken 5a, 5b zusammengefasst. Dabei ist in beiden Blöcken derselbe Messwert 2' enthalten. Bei der Position 7 dieses Messwerts 2' handelt es sich hier um eine Randposition 8 - der Messwert 2' ist im Block 5a auf einer Endposition und im Block 5b auf einer Anfangsposition platziert.

Zu den Blöcken 5a, 5b werden jeweils Hashwerte 11a, 11b berechnet. Daraufhin werden mit Signierern 17 zu den Hashwerten 11a, 11b jeweils Signaturwerte 6a, 6b berechnet.

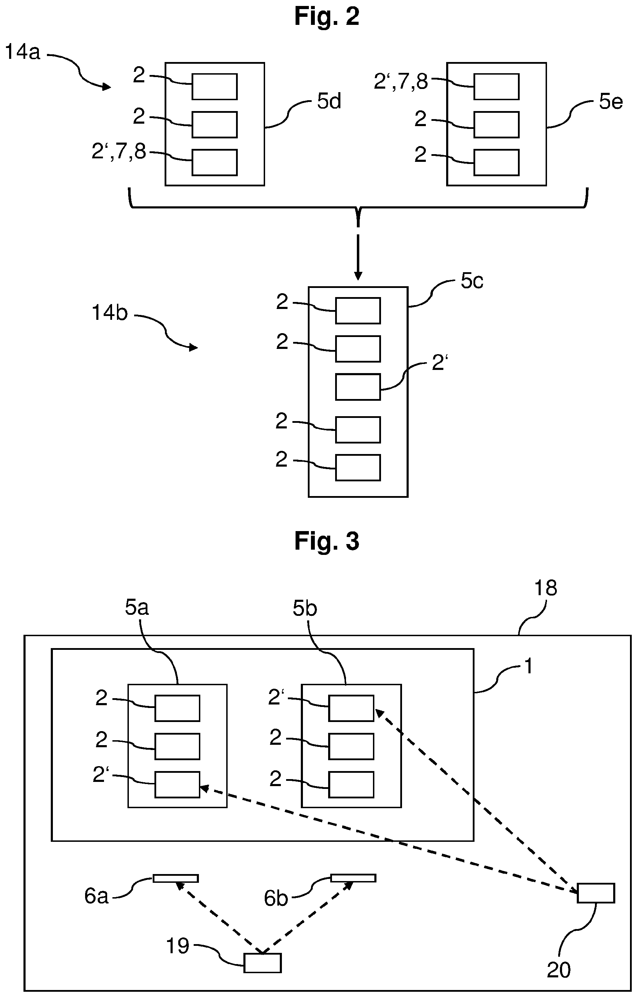

Fig. 2 zeigt eine Gruppierung 14a von Blöcken 5d, 5e von Messwerten 2. Dabei ist in beiden Blöcken 5d, 5e der Messwert 2' enthalten, dessen Position 7 durch eine Randposition 8 im jeweiligen Block 5d, 5e bestimmt ist.

Die Blöcke 5d, 5e werden im nächsten Schritt zu einer neuen Gruppierung 14b formiert, die den Block 5c aufweist. Der neue Block 5c enthält die Messwerte 2 der Blöcke 5d, 5e der alten Gruppierung. Der Messwert 2' ist im Block 5c jedoch nur einmal enthalten.

In Fig. 3 ist eine Verifikationseinrichtung 18 gezeigt, die einen Verifikator 19 sowie einen Überprüfer 20 aufweist. In die Verifikationseinrichtung 18 ist ein Feld 1 von Blöcken 5a, 5b von Messwerten 2, 2' eingegeben worden. Zu jedem Block 5a, 5b ist weiter ein Signaturwert 6a, 6b eingegeben worden.

Der Verifikator 19 verifiziert die Signaturwerte 6a, 6b der Blöcke 5a, 5b. Der Überprüfer 20 kontrolliert, ob ein Messwert 2' vorhanden ist, der in beiden Blöcken 5a, 5b enthalten ist.

Die Erfindung schlägt allgemein ein Verfahren zur Aufzeichnung eines Feldes 1 von Messwerten 2 vor, bei dem die Messwerte 2 zu Blöcken 5 gruppiert und zu jedem Block 5 Signaturwerte 6 berechnet werden, wobei wenigstens ein Block 5a einen Messwert 2' enthält, der auch in wenigstens einem anderen Block 5b enthalten ist. Ein derartiges Verfahren kann insbesondere mit einer erfindungsgemäßen Messanordnung 21, Aufzeichnungseinrichtung 15 und Verifikationseinrichtung 18 durchgeführt werden.

### Bezugszeichenliste

- 1: Feld (von 2)
- 2: Messwert
- 3: Messdatum
- 4: Positionsangabe
- 5: Block
- 6: Signaturwert
- 7: Position (von 2 in 5)
- 8: Randposition
- 9: Gruppe (von 2)
- 10: Messzeitpunkt
- 11: Hashwert
- 12: Messdaten
- 13: Sensor
- 14: Gruppierung
- 15: Aufzeichnungseinrichtung
- 16: Gruppierer
- 17: Signierer
- 18: Verifikationseinrichtung
- 19: Verifikator
- 20: Überprüfer
- 21: Messanordnung

## Patentansprüche

1. Verfahren zur Aufzeichnung eines Feldes (1) von Messwerten (2), wobei das Feld (1) von Messwerten (2) zu jedem Messwert (2) wenigstens ein Messdatum (3) und eine zugehörige Positionsangabe (4) in dem Feld (1) aufweist, wobei die Messwerte (2) zu Blöcken (5) gruppiert werden und zu jedem Block (5) ein Signaturwert (6) berechnet wird, **dadurch gekennzeichnet, dass** wenigstens ein Block (5a) wenigstens einen Messwert (2') enthält, der auch in wenigstens einem anderen Block (5b) enthalten ist.

2. Verfahren nach dem vorangehenden Anspruch, **dadurch gekennzeichnet, dass** der wenigstens eine Messwert (2') an einer festen Position (7) in dem wenigstens einen Block (5a) und/oder in dem wenigstens einen anderen Block (5b) angeordnet wird.

3. Verfahren nach einem der vorangehenden Ansprüche, **dadurch gekennzeichnet, dass** der wenigstens eine Messwert (2') an einer Randposition (8) in dem wenigstens einen Block (5a) und/oder in dem wenigstens einen anderen Block (5b) angeordnet wird.

4. Verfahren nach einem der vorangehenden Ansprüche, **dadurch gekennzeichnet, dass** die Position (7) des wenigstens einen Messwerts (2') in dem wenigstens einen Block (5a) und/oder in dem wenigstens einem anderen Block (5b) aus der zugehörigen Positionsangabe (4) bestimmt wird.

5. Verfahren nach einem der vorangehenden Ansprüche, **dadurch gekennzeichnet, dass** jeder Block (5) aus einer in Bezug auf das Feld (1) zusammenhängenden Gruppe (9) von Messwerten (2) gebildet wird.

6. Verfahren nach einem der vorangehenden Ansprüche, **dadurch gekennzeichnet, dass** das Feld (1) eindimensional ist.

7. Verfahren nach einem der vorangehenden Ansprüche, **dadurch gekennzeichnet, dass** die Positionsangabe (4) durch einen Messzeitpunkt (10) bestimmt wird.

8. Verfahren nach einem der vorangehenden Ansprüche, **dadurch gekennzeichnet, dass** für den Signaturwert (6) ein Hashwert (11) des Blockes (5) berechnet wird.

9. Verfahren nach einem der vorangehenden Ansprüche, **dadurch gekennzeichnet, dass** die Messdaten (12) aus wenigstens einem Sensor (13) ausgelesen werden, insbesondere ein Messzeitpunkt (10) ermittelt und zu einer Positionsangabe (4) im Feld (1) verarbeitet wird.

10. Verfahren zur Aufzeichnung eines Feldes (1) von Messwerten (2), wobei das Feld (1) von Messwerten (2) zu jedem Messwert (2) wenigstens ein Messdatum (3) und eine zugehörige Positionsangabe (4) in dem Feld (1) aufweist, wobei die Messwerte (2) zu Blöcken (5) gruppiert werden und zu jedem Block (5) ein Signaturwert (6) berechnet wird, insbesondere bei einem Verfahren nach einem der vorangehenden Ansprüche, **dadurch gekennzeichnet, dass** zu einer vorhandenen Gruppierung (14a) in Blöcken (5) eine neue Gruppierung (14b) in Blöcke (5) gebildet wird, wobei wenigstens ein Block (5c) der neuen Gruppierung (14b) aus wenigstens zwei Blöcken (5d, 5e) der alten Gruppierung (14a), insbesondere aus wenigstens zwei Blöcken (5d, 5e), die wenigstens einen Messwert (2') gemeinsam haben, gebildet wird, insbesondere wobei der wenigstens eine gemeinsame Messwert (2') nur einfach in den Block (5c) der neuen Gruppierung (14b) eingeht.

11. Verfahren zur Verifikation eines Feldes (1) von Messwerten (2), wobei das Feld (1) von Messwerten in Blöcke (5) gruppiert wird und zu jedem Block (5) ein Signaturwert (6) bereitgestellt wird, insbesondere als Ergebnis eines Verfahrens nach einem der vorangehenden Ansprüche, wobei die Signaturwerte (6) verifiziert werden, **dadurch gekennzeichnet, dass** zu wenigstens einem Block (5a) der Blöcke (5) überprüft wird, ob wenigstens ein Messwert (2') auch in wenigstens einem anderen Block (5b) enthalten ist.

12. Aufzeichnungseinrichtung (15) für Messwerte (2), wobei ein Feld (1) von Messwerten (2) eingebbar ist, wobei das Feld (1) von Messwerten (2) zu jedem Messwert (2) wenigstens ein Messdatum (3) und eine zugehörige Positionsangabe (4) in dem Feld (1) aufweist, wobei die Messwerte (2) mit einem Gruppierer (16) zu Blöcken (5) gruppierbar sind und zu jedem Block (5) mit einem Signierer (17) ein Signaturwert (6) berechenbar ist, **dadurch gekennzeichnet, dass** der Gruppierer (16) derart eingerichtet ist, dass wenigstens ein Block (5a) wenigstens einen Messwert (2') enthält, der auch in wenigstens einem anderen Block (5b) enthalten ist.

13. Aufzeichnungseinrichtung (15) nach Anspruch 12, **dadurch gekennzeichnet, dass** Mittel zur Ausführung eines Verfahrens nach einem der Ansprüche 1 bis 11 ausgebildet sind.

14. Verifikationseinrichtung (18) für Messwerte (2), wobei ein Feld (1) von Messwerten (2) eingebbar ist, das in Blöcke (5) gruppiert ist, wobei zu jedem Block (5) ein Signaturwert (6) eingebbar ist, wobei ein Verifikator (19) zu einer Verifizierung der Signaturwerte (6) eingerichtet ist, **dadurch gekennzeichnet, dass** ein Überprüfer (20) zu einer Überprüfung, ob wenigstens ein Block (5a) wenigstens einen Messwert (2') enthält, der auch in wenigstens einem anderen Block (5b) enthalten ist, eingerichtet ist.

15. Verifikationseinrichtung (18) nach dem vorangehenden Anspruch, **dadurch gekennzeichnet, dass** Mittel zur Ausführung eines Verfahrens nach Anspruch 11 ausgebildet und/oder eingerichtet sind.

16. Messanordnung (21), mit wenigstens einem Sensor (13), der zu einer Erzeugung eines Feldes (1) von Messwerten (2), wobei das Feld (1) von Messwerten (2) zu jedem Messwert (2) wenigstens ein Messdatum (3) und eine zugehörige Positionsangabe (4) in dem Feld (1) aufweist, eingerichtet ist, **dadurch gekennzeichnet, dass** eine Aufzeichnungseinrichtung (15) nach Anspruch 12 oder 13 ausgebildet ist, insbesondere die Aufzeichnungseinrichtung (15) derart an den wenigstens einen Sensor (13) angeschlossen ist, dass das erzeugte Feld (1) von Messwerten (2) in die Aufzeichnungseinrichtung (15) eingegeben wird.

## Claims

1. Method for recording a field (1) of measured values (2), wherein the field (1) of measured values (2) has, for each measured value (2), at least one measurement datum (3) and an associated position indication (4) in the field (1), wherein the measured values (2) are grouped into blocks (5) and a signature value (6) is calculated for each block (5), **characterized in that** at least one block (5a) contains at least one measured value (2') which is also contained in at least one other block (5b).

2. Method according to the preceding claim, **characterized in that** the at least one measured value (2') is arranged at a fixed position (7) in the at least one block (5a) or the at least one other block (5b).

3. Method according to one the preceding claims, **characterized in that** the at least one measured value (2') is arranged at an edge position (8) in the at least one block (5a) or in the at least one other block (5b).

4. Method according to one the preceding claims, **characterized in that** the position (7) of the at least one measured value (2') in the at least one block (5a) and/or in the at least one other block (5b) is determined from the associated position indication (4).

5. Method according to one the preceding claims, **characterized in that** each block (5) from a group (9) of the measured values (2) that is contiguous with respect to the field (1) is formed from measured values (2).

6. Method according to one the preceding claims, **characterized in that** the field (1) is one-dimensional.

7. Method according to one the preceding claims, **characterized in that** the position indication (4) is determined by a measurement time (10).

8. Method according to one the preceding claims, **characterized in that** a hash value (11) of the block (5) is calculated for the signature value (6).

9. Method according to one of the preceding claims, **characterized in that** the measurement data (12) are read out from at least one sensor (13), in particular a measurement time (10) is determined and processed into a position indication (4) in the field (1).

10. Method for recording a field (1) of measured values (2), wherein the field (1) of measured values (2) has, for each measured value (2), at least one measurement datum (3) and an associated position indication (4) in the field (1), wherein the measured values (2) are grouped into blocks (5) and a signature value (6) is calculated for each blocks (5), in particular in a method according to one of the preceding claims, **characterized in that** a new grouping (14b) into blocks (5) is formed for an existing grouping (14a) into blocks (5), wherein at least one block (5c) in the new grouping (14b) is formed from at least two blocks (5d, 5e) in the existing grouping (14a), in particular from at least two blocks (5d, 5e) which have at least one measured value (2') in common, in particular wherein the at least one common measured value (2') is singly included in the block (5c) of the new grouping (14b).

11. Method for verifying a field (1) of measured values (2), wherein the field (1) of measured values is grouped into blocks (5) and a signature value (6) is provided for each block (5), in particular as a result of a method according to one of the preceding claims, wherein the signature values (6) are verified, **characterized in that** with respect to at least one block (5a) of the blocks (5) it is checked to see whether at least one measured value (2') is also contained in at least one other block (5b).

12. Recording device (15) for measured values (2), wherein a field (1) of measured values (2) can be input, wherein the field (1) of measured values (2) has, for each measured value (2), at least one measurement datum (3) and an associated position indication (4) in the field (1), wherein the measured values (2) can be grouped into blocks (5) using a grouper (16) and a signature value (6) can be calculated for each block (5) using a signer (17), **characterized in that** the grouper (16) is configured such that at least one block (5a) contains at least one measured value (2') which is also contained in at least one other block (5b).

13. Recording device (15) according to claim 12, **characterized in that** means are formed for carrying out a method according to one of claims 1 to 11.

14. Verification device (18) for measured values (2), wherein a field (1) of measured values (2) can be input, which is grouped into blocks (5), wherein a signature value (6) can be input for each block (5), wherein a verifier (19) is configured to verify the signature values (6), **characterized in that** a checker (20) is configured to check whether at least one block (5a) contains at least one measured value (2') which is also contained in at least one other block (5b).

15. Verification device (18) according to the preceding claim, **characterized in that** means are formed and/or adapted for carrying out a method according to claim 11.

16. Measurement arrangement (21), comprising: at least one sensor (13) which is configured to generate a field (1) of measured values (2), wherein the field (1) of measured values (2) has, for each measured value (2), at least one measurement datum (3) and an associated position indication (4) in the field (1), **characterized in that** a recording device (15) according to claim 12 or 13 is formed, in particular **in that** the recording device (15) is connected to the at least one sensor (13) such that the generated field (1) of measured values (2) is input into the recording device (15).

## Revendications

1. Procédé pour l'enregistrement d'un champ (1) de valeurs de mesure (2), dans lequel le champ (1) de valeurs de mesure (2) comporte pour chaque valeur de mesure (2) au moins une date de mesure (3) et une indication de position (4) dans le champ (1) correspondante, les valeurs de mesure (2) étant groupées en blocs (5) et une valeur de signature (6) étant calculée pour chaque bloc (5), **caractérisé en ce qu'**au moins un bloc (5a) contient au moins une valeur de mesure (2') qui est aussi contenue dans au moins un autre bloc (5b).

2. Procédé selon la revendication précédente, **caractérisé en ce que** l'au moins une valeur de mesure (2') est disposée dans une position (7) fixe dans l'au moins un bloc (5a) et/ou dans l'au moins un autre bloc (5b).

3. Procédé selon l'une des revendications précédentes, **caractérisé en ce que** l'au moins une valeur de mesure (2') est disposée dans une position marginale (8) dans l'au moins un bloc (5a) et/ou dans l'au moins un autre bloc (5b).

4. Procédé selon l'une des revendications précédentes, **caractérisé en ce que** la position (7) de l'au moins une valeur de mesure (2') dans l'au moins un bloc (5a) et/ou dans l'au moins un autre bloc (5b) est déterminée à partir de l'indication de position (4) associée.

5. Procédé selon l'une des revendications précédentes, **caractérisé en ce que** chaque bloc (5) est formé d'un groupe (9) de valeurs de mesure (2) continu par rapport au champ (1).

6. Procédé selon l'une des revendications précédentes, **caractérisé en ce que** le champ (1) est monodimensionnel.

7. Procédé selon l'une des revendications précédentes, **caractérisé en ce que** l'indication de position (4) est déterminée par un instant de mesure (10).

8. Procédé selon l'une des revendications précédentes, **caractérisé en ce qu'**une valeur de hachage (11) du bloc (5) est calculée pour la valeur de signature (6).

9. Procédé selon l'une des revendications précédentes, **caractérisé en ce que** les données de mesure (12) sont lues à partir d'au moins un capteur (13), en particulier **en ce qu'**un instant de mesure (10) est déterminé et traité pour obtenir une indication de position (4) dans le champ (1).

10. Procédé pour l'enregistrement d'un champ (1) de valeurs de mesure (2), dans lequel le champ (1) de valeurs de mesure (2) comporte pour chaque valeur de mesure (2) au moins une date de mesure (3) et une indication de position (4) dans le champ (1) correspondante, les valeurs de mesure (2) étant groupées en blocs (5) et une valeur de signature (6) étant calculée pour chaque bloc (5), en particulier dans un procédé selon l'une des revendications précédentes, **caractérisé en ce que**, pour un groupement (14a) en blocs (5) existant, un nouveau groupement (14b) en blocs (5) est formé, au moins un bloc (5c) du nouveau groupement (14b) étant formé à partir d'au moins deux blocs (5d, 5e) de l'ancien groupement (14a), en particulier à partir d'au moins deux blocs (5d, 5e) ayant en commun au moins une valeur de mesure (2'), l'au moins une valeur de mesure (2') commune n'entrant qu'une fois dans le bloc (5c) du nouveau groupement (14b).

11. Procédé pour la vérification d'un champ (1) de valeurs de mesure (2), dans lequel le champ (1) de valeurs de mesure est groupé en blocs (5) et une valeur de signature (6) résultant en particulier d'un procédé selon l'une des revendications précédentes est fournie pour chaque bloc (5), les valeurs de signature (6) étant vérifiées, **caractérisé en ce que**, pour au moins un bloc (5a) des blocs (5), le fait qu'au moins une valeur de mesure (2') soit contenue aussi dans l'au moins un autre bloc (5b) est vérifié.

12. Installation d'enregistrement (15) pour des valeurs de mesure (2), dans laquelle un champ (1) de valeurs de mesure (2) peut être saisi, dans laquelle le champ (1) de valeurs de mesure (2) comporte pour chaque valeur de mesure (2) au moins une date de mesure (3) et une indication de position (4) dans le champ (1) correspondante, dans laquelle les valeurs de mesure (2) peuvent être groupées en blocs (5) avec un groupeur (16) et une valeur de signature (6) peut être calculée pour chaque bloc (5) avec un signeur (17), **caractérisée en ce que** le groupeur (16) est configuré de telle sorte qu'au moins un bloc (5a) contient au moins une valeur de mesure (2') qui est contenue aussi dans l'au moins un autre bloc (5b).

13. Installation d'enregistrement (15) selon la revendication 12, **caractérisée en ce que** des moyens pour l'exécution d'un procédé sont conçus selon l'une des revendications 1 à 11.

14. Installation de vérification (18) pour des valeurs de mesure (2), dans laquelle un champ (1) de valeurs de mesure (2) groupé en blocs (5) peut être saisi, dans laquelle une valeur de signature (6) peut être saisie pour chaque bloc (5), dans laquelle un vérificateur (19) est configuré pour vérifier les valeurs de signature (6), **caractérisée en ce qu'**un contrôleur (20) est configuré pour contrôler si au moins un bloc (5a) contient au moins une valeur de mesure (2') qui est aussi contenue dans l'au moins un autre bloc (5b).

15. Installation de vérification (18) selon la revendication précédente, **caractérisée en ce que** des moyens pour l'exécution d'un procédé sont conçus et/ou configurés selon la revendication 11.

16. Dispositif de mesure (21) avec au moins un capteur (13) configuré pour générer un champ (1) de valeurs de mesure (2), lequel champ (1) de valeurs de mesure (2) comporte pour chaque valeur de mesure (2) au moins une date de mesure (3) et une indication de position (4) dans le champ (1) correspondante, **caractérisé en ce qu'**une installation d'enregistrement (15) selon la revendication 12 ou 13 est formée, en particulier que l'installation d'enregistrement (15) est connectée à l'au moins un capteur (13) de telle manière que le champ (1) de valeurs de mesure (2) généré est saisi dans l'installation d'enregistrement (15).
